# EUROPEAN PATENT SPECIFICATION

(11) **EP 1 046 453 B1**
(45) Date of publication and mention of the grant of the patent: **22.12.2004**
(21) Application number: 00108578.6
(22) Date of filing: 19.04.2000
(51) Int. Cl.: B23K 20/12, B23K 37/053

(54) **Friction stir welding apparatus**
Drehende Reibungsschweissanlage
Appareil pour soudage par friction à mouvement cyclique

(30) Priority: 20.04.1999 JP 11243999
(43) Date of publication of application: 25.10.2000
(73) Proprietor: SHOWA DENKO K.K., Tokyo 105-8518 (JP)
(72) Inventor: Tochigi, Masaharu, Tochigishi, Tochigi (JP); Kawata, Naoyuki, Oyamashi, Tochigi (JP)
(74) Representative: Viering, Jentschura & Partner

(56) References cited:
- PATENT ABSTRACTS OF JAPAN vol. 1998, no. 12, 31 October 1998 (1998-10-31) -& JP 10 180467 A (AMADA CO LTD;AMADA ENG CENTER:KK), 7 July 1998 (1998-07-07)

## Description

### BACKGROUND OF THE INVENTION

### 1. Field of the Invention

This invention relates to a friction agitation joining apparatus for joining an abutted portion of metallic members to be joined used for an automobile suspension arm and the like.

### 2. Description of Related Art

In recent years, a friction agitation joining method, one type of solid joining methods, has been developed in place of a melt welding method such as a TIG welding (Tungsten-Inert-Gas arc welding) and a MIG welding (Metal electrode Inert Gas welding), or a brazing. In this friction agitation joining method, a rotating probe is inserted into an abutted portion of the abutted members and advanced along the abutted portion while softening and agitating the abutted portion by friction heat. Alternatively, the abutted members are moved so that the probe advances along the abutted portion. According to this friction agitation joining method, since the heat quantity input into a joining portion is very small, cracks due to heat are prevented from being generated. Also, since the joining portion becomes uniform in material due to the agitation and mixture thereof and no composition change occurs, the joining portion has a sufficient rigidity and strength.

For example, Japanese Unexamined Laid-open Patent Publication No. 10-180467 discloses a conventional friction agitation joining apparatus for joining members abutted each other (see Fig. 5), as in the preamble of claim 1.

This apparatus includes supporting rollers 53, 53, 54 for supporting and rotating first and second abutted pipe members 51, 52, pressing rollers 55, 55 for pressing the first and second abutted pipe members 51, 52 toward the supporting rollers 53, 53, 54, a joining device 57 having a probe 56 for generating friction heat at the abutted portion of the first and second abutted pipe members 51, 52 and a head 59 having a detachable spindle 58 for rotating the joining device 57. The head 59 and the pressing rollers 55, 55 are adjustable in height in accordance with the diameter of the first and second abutted pipe members 51, 52.

The joining method of the pipe members according to this apparatus will be explained. The first and second pipe members 51, 52 are placed on the supporting rollers 53, 53, 54 in an abutted state. The abutted portion of the first and second pipe members 51, 52 is positioned so as to align with the joining device 57. Furthermore, the pressing rollers 55, 55 press the first and second pipe members 51, 52 toward the supporting rollers 53, 53, 54. In this state, the tip of the rotating probe 56 of the joining device 57 is pressed onto the abutted portion of the first and second pipe members 51, 52, which generates friction heat by the friction between the rotating probe 56 and the abutted portion to soften the abutted portion. Then, the first and second pipe members 51, 52 are rotated about the axis thereof by the supporting roller 54, resulting in an advance movement of the probe 56 relative to the pipe members 51, 52 along the abutted portion thereof. Therefore, the abutted portion is softened along the circumference thereof. As the probe 56 advances along the circumference of the abutted portion relative to the pipe members 51, 52, the softened metal of the abutted portion is agitated by the rotation of the probe 56 and moves behind the probe 56 to be solidified by the quick loss of the heat. Thus, the first and second pipe members 51, 52 are joined at the abutted portion.

As mentioned above, the friction joining is conducted by advancing the probe 56 relative to the abutted portion while rotating the first and second pipe members 51, 52 about the axis thereof by the supporting roller 54. Thus, the first and second pipe members 51, 52 can be joined.

However, in the aforementioned apparatus, although the first and second pipe members 51, 52 are supported by the supporting rollers 53, 53, 54 and pressed by the pressing rollers 55, 55 toward the supporting rollers to restrict the up-and-down movement of the pipe members, the axial movement of the first and second pipe members 51, 52 are not restricted. Therefore, if a slippage occurs between the supporting roller 54 and at least one of the first and second pipe members 51, 52 during the rotation of the first and second pipe members 51, 52 by the supporting roller 54, a difference in rotational rate occurs between the first and second pipe members 51, 52. Also, even if the first and second pipe members 51, 52 are disposed on the supporting rollers 53, 53, 54 so as not to form a gap at the abutted portion, a gap may be formed at the abutted portion during the joining process due to the vibration of the supporting rollers 53, 53, 54 and/or the pressure of the probe 56. In particularly, the aforementioned problems occur more easily in a case where three or more abutted members are joined by the apparatus.

### SUMMARY OF THE INVENTION

The present invention is made to solve the aforementioned problems.

It is an object of the present invention to provide a friction agitation joining apparatus which can join abutted members while rotating the abutted members without generating a difference in rotational rate therebetween and a gap at the abutted portion of the members.

In order to attain the aforementioned objects, according to the present invention, a friction agitation joining apparatus for joining a plurality of abutted members, the friction agitation joining apparatus includes rotatable chucking portions for chucking opposite ends of the abutted members while axially pressing the abutted members, a supporting roller for supporting the abutted members, a driving motor for rotating the abutted members about an axis thereof, and a joining device having a rotatable probe disposed adjacent to an abutted portion of the abutted members, wherein the probe softens and agitates the abutted portion to join the abutted members in accordance with a rotation of the abutted members.

With this apparatus, since the abutted members are rotated about the axis thereof by the chucking portions which axially presses the abutted members, a difference in rotational rate among/between the abutted members and a gap in the abutted portion of the abutted members are prevented from occurring during the joining process of the abutted members.

At least one of the chucking portions may be rotated by the driving motor to rotate the abutted members chucked by the chucking portions about the axis of the abutted members. With this structure, the rotation of the driving motor is assuredly transmitted to the abutted members, so that the abutted members are rotated about the axis thereof at any desired rotational rate. Therefore, various abutted members made of various materials can be joined by the apparatus.

The supporting rollers may be rotated by the driving motor to rotate the abutted members about the axis of the abutted members. With this structure, the rotation of the driving motor is transmitted to the abutted members, so that the abutted members are rotated about the axis thereof.

It is preferable that the supporting rollers are movable in a direction of the axis of the abutted members. With this structure, the supporting rollers can be disposed in accordance with the length of the abutted members to hold the whole abutted members horizontally.

It is preferable that the supporting rollers are capable of ascending and descending. With this structure, the supporting rollers can be adjusted its height in accordance with the outer diameter of the abutted members, so that the abutted members are supported horizontally.

It is preferable that the supporting rollers include a pair of rollers symmetrically disposed so as to rotatably support the abutted members at two points such that a predetermined angle is formed between the pair of rollers relative to the axis of the abutted members. With this structure, the abutted members are steadily supported.

It is preferable that a pressing roller for downwardly pressing the abutted members is further provided. With this structure, the abutted members can be more steadily supported.

A punching device having a punch may be provided for punching an opening into the abutted members at the same time, before or after the abutted members are joined. With this structure, a punch opening can be formed in the abutted members on or before/after joining the abutted members.

It is preferable that at least one of the chucking portions is shiftable toward the other chucking portion to axially press the abutted members. With this structure, the abutted members are assuredly and easily pressed in the axial direction thereof.

It is preferable that the driving motor is provided in the chucking portion. With this structure, the rotation of the driving motor is immediately transmitted to the chucking portion and an installation space for the driving motor can be saved.

It is preferable that the joining device is capable of ascending and descending. With this structure, the joining process can be performed by descending and ascending the joining device.

The abutted members may include at least one of a yoke member and a bush mounting member. With this structure, an arm member including at least one of the yoke member and the bush mounting member, such as an automobile suspension arm member, can be manufactured.

The abutted members may be made of aluminum or aluminum alloy, which enables a manufacturing of a member made of aluminum or aluminum alloy.

### BRIEF DESCRIPTION OF DRAWINGS

The above and other objects, features, and advantages of the present invention will be apparent from the following detailed description of the preferred embodiment with reference to the attached drawings, wherein:
Fig. 1 is a side view showing an embodiment according to the present invention;
Fig. 2 is a plan view of the abutted members placed on supporting rollers;
Fig. 3 is a cross-sectional view of the center of the main member;
Fig. 4 is an enlarged perspective view of the abutted portion of the main member and the yoke member; and
Fig. 5 is a side view of a conventional friction agitation joining apparatus.

### DETAILED DESCRIPTION OF THE PREFERRED EMBODIMENT

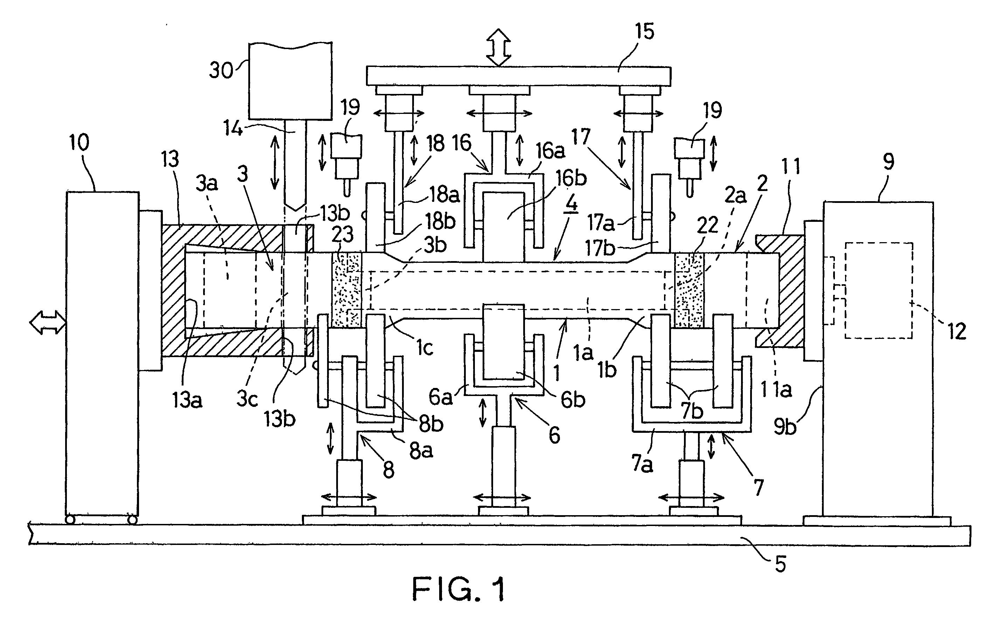

A friction agitation joining apparatus according to an embodiment of the present invention will be explained with reference to Figs. 1 to 4.

In this embodiment, a suspension arm member 4 used for an automobile or the like is manufactured by joining a main member 1, a yoke member 2 and a bush mounting member 3.

The main member 1 is manufactured by cutting an aluminum extruded pipe having a hollow portion 1a to have a predetermined length in the direction of extrusion. The outer circumference of both ends of the main member 1 is formed so as to coincide with the outer diameter of the yoke member 2 and that of the bush mounting member 3.

The yoke member 2 is manufactured by cutting an aluminum extruded article to have a predetermined thickness in the direction of extrusion. One end of the yoke member 2 is formed to have a cross-sectional U-shape and the other end of the yoke member 2 is formed to have a columnar shape. At the center of the end surface to which the main member 1 is to be connected, a convex portion 2a having approximately the same diameter as that of the hollow portion 1a of the main member 1 is provided so as to be forcibly fitted into the hollow portion 1a of the main member 1.

The bush mounting member 3 is manufactured by cutting an aluminum extruded article to have a predetermined thickness in the direction of extrusion. The bush mounting member 3 has an opening 3a of a circular cross-section for mounting a cylindrical vibroisolating bush (not shown). The end portion to which the main member 1 is to be connected is formed to have a columnar shape at a predetermined distance from the opening 3a. At the center of the end surface to which the main member 1 is to be connected, a convex portion 3b having approximately the same diameter as that of the hollow portion 1a of the main member 1 is provided so as to be forcibly fitted into the hollow portion 1a of the main member 1. The reason for having a predetermined distance between the opening 3a of the bush mounting member 3 and the end portion to which the main member 1 is to be connected is to form a punched opening 3c by a punch 14.

Next, the friction agitation joining apparatus according to the present invention will be explained.

As shown in Fig. 1, the reference numeral 5 denotes a base member. Provided on the base member 5 are three supporting members 6, 7, 8 for supporting three abutted members 1, 2, 3 and right and left rotating devices 9, 10 for rotating the abutted members 1, 2, 3 about the axis thereof.

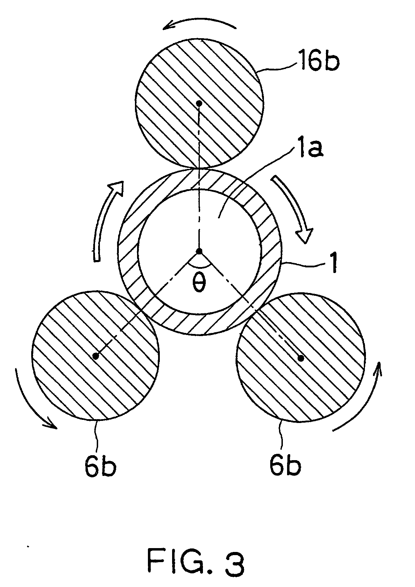

The central supporting member 6 located at the center of the main member 1 is movable in the longitudinal direction of the base member 5 and capable of ascending and descending, and includes a forked supporting roller bracket 6a and a pair of supporting rollers 6b, 6b rotatably provided to the supporting roller bracket 6a. As shown in Fig. 3, the supporting rollers 6b, 6b are disposed so as to rotatably support the main member 1 at two points such that a predetermined θ is formed between the supporting rollers 6b, 6b relative to the axis of the main member 1.

As shown in Fig. 1, the right supporting member 7 located at the abutted portion 22 of the main member 1 and the yoke member 2 includes a forked supporting roller bracket 7a movable in the longitudinal direction of the base member 5 and capable of ascending and descending, and four supporting rollers 7b, 7b rotatably provided to the supporting roller bracket 7a. Two pairs of the supporting rollers 7b, 7b, like the central supporting rollers 6b, 6b, are disposed so as to rotatably support a right large diameter portion 1b of the main member 1 and the yoke member 2 at two points such that a predetermined angle θ is formed between the supporting rollers relative to the axis of the main member 1. The right pair of the supporting rollers 7b, 7b and the left pair of the supporting rollers 7b, 7b are disposed at a predetermined distance in the axial direction, so that the abutted portion 22 of the main member 1 and the yoke member 2 does not touch the supporting rollers 7b, 7b when joining the abutted portion 22 and is located between the right pair of the supporting rollers 7b, 7b and the left pair of the supporting rollers 7b, 7b.

The left supporting member 8 located at the abutted portion 23 of the main member 1 and the bush mounting member 3 is capable of ascending and descending and movable in the longitudinal direction of the base member 5 and includes a forked supporting roller bracket 8a and four supporting rollers 8b, 8b rotatably provided to the supporting roller bracket 8a. Like the right supporting rollers 7b, 7b, the left supporting rollers 8b, 8b rotatably support the main member 1 and the bush mounting member 3 by two points. The pair of supporting rollers 8b, 8b at the bush mounting member side are formed to have a thin thickness so as to avoid a punch 14 at the time of forming a punched opening 3c in the middle of the bush mounting member 3.

As mentioned above, the central supporting member 6, the right supporting member 7 and the left supporting member 8 are movable in the longitudinal direction of the base member 5 so as to be located in accordance with the length of the suspension arm member 4 to be manufactured. Also, the central supporting member 6, the right supporting member 7 and the left supporting member 8 are capable of ascending and descending so as to support the suspension arm member 4 horizontally irrespective of the shape different in diameter along the length thereof.

The right rotating device 9 and the left rotating device 10 are disposed on both ends of the base member 5 so as to face each other, having the supporting members 6, 7, 8 therebetween.

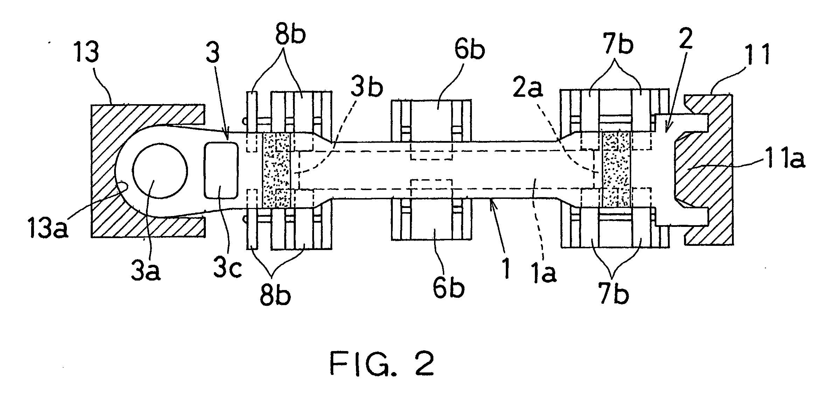

The bottom 9a of the right rotating device 9 is fixed on the base member 5. The right rotating device 9 is provided with a right chucking arm 11 rotatably provided on the upper left side 9b and a driving motor 12 for rotating the right chucking arm 11 in the right rotating device 9. As shown in Fig. 2, the right chucking arm 11 has a convex portion 11a to be fitted in the U-shaped end portion of the yoke member 2 for assuredly chucking the yoke member 2. Accordingly, rotating the right chucking arm 11 by the driving motor 12 causes the yoke member 2 chucked by the right chucking arm 11 to be rotated about the axis thereof.

The left rotating device 10 is disposed on the base member 5 such that the device 10 is movable in the longitudinal direction of the base member 5. The left rotating device 10 is provided with a left chucking arm 13 rotatably provided on the upper right side 10a of the device 10. The left chucking arm 13 has a concave portion 13a corresponding to the end portion of the bush mounting member 3 so as to assuredly chuck the bush mounting member 3. Thus, the movement of the left rotating device 10 toward the right rotating device 9 while chucking the bush mounting member 3 by the left chucking arm 13 causes the convex portion 3b of the bush mounting member 3 and the convex portion 2b of the yoke member 2 to be forcibly fitted into the respective left and right hollow portions 1a of the main member 1.

A further movement of the left rotating device 10 toward the right rotating device 9 causes an appropriately pressurized state of the abutted portion 22 of the main member 1 and the yoke member 2 and the abutted portion 23 of the main member 1 and the bush mounting member 3. Therefore, the rotation of the right chucking arm 11 of the right rotating device 9 causes a rotation of the yoke member 2, the main member 1 and the bush mounting member 3 about the axis thereof due to the assured fitting thereof as well as the forcible fitting of the convex portions 2b, 3b into the hollow portion 1a.

The upper and lower walls of the left chucking arm 13 are formed longer than the side walls of the left chucking arm 13. In the upper and lower walls of the left chucking arm 13, punching holes 13b, 13b with approximately the same shape and diameter as those of the punch 14 are formed. Above the punching hole 13b, the punch 14 capable of descending and ascending is provided to a punching device 30. Thus, when the punch 14 descends through the punching holes 13b, 13b with the bush mounting member 3 chucked by the left chucking arm 13, a rectangular punched opening 3c is formed in the middle of the bush mounting member 3. At this time, the left chucking arm 13 functions as a die.

Above the supporting members 6, 7, 8, a lift 15 which descends and ascends while keeping the horizontal level is provided. The lift 15 is provided with three pressing members 16, 17, 18 for downwardly pressing the main member 1 supported by the supporting members 6, 7, 8.

Among these pressing members, the central pressing member 16 located at the center of the lift 15 includes a forked pressing roller bracket 16a movable in the longitudinal direction of the lift 15 and capable of descending and ascending and a pressing roller 16b provided to the pressing roller bracket 16a. As shown in Fig. 3, the central pressing roller 16b is disposed above the rotating axis of the main member 1 so as to rotatably press the main member 1 at one point.

Each of the right and left pressing members 17, 18 located at both ends of the lift 15 includes a pressing roller bracket 17a, 18a movable in the right-and-left direction of the lift 15 and capable of descending and ascending and a pressing rollers 17b, 18b provided to the pressing roller bracket 17a, 18a. These pressing rollers 17b, 18b are provided above the rotating axis of the main member 1 so as to press large diameter portions 1b, 1c of the main member 1 at one point.

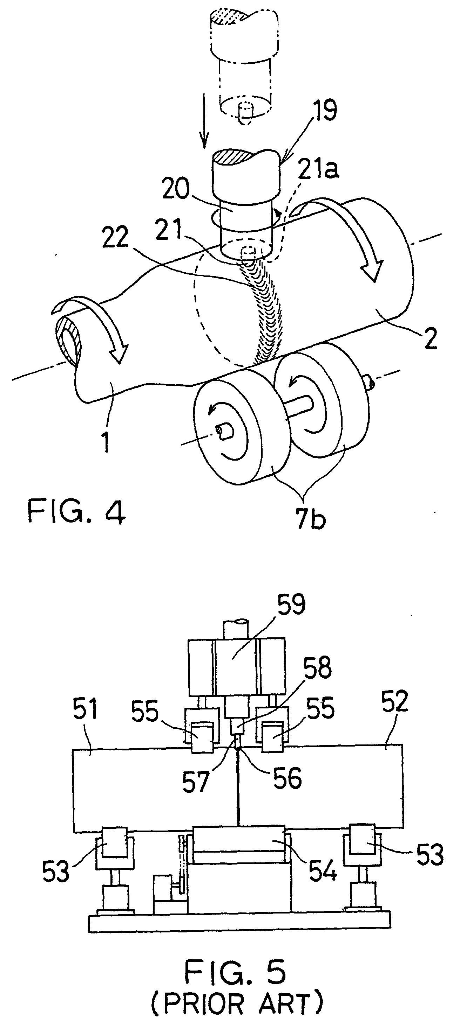

Above the abutted portion 22 of the main member 1 and the yoke member 2, a joining device 19 is provided. Similarly, above the abutted portion 23 of the main member 1 and the bush mounting member 3, a joining device 19 is provided. The joining device 19, as shown in Fig. 4, includes a columnar rotor 20 and a pin-like probe 21 with a smaller diameter than that of the rotor 20. The probe 21 is protruded from the end of the rotor 20 along the axis thereof. The rotor 20 and the probe 21 are made of the material which is harder than that of the main member 1, the yoke member 2 and the bush mounting member 3 and can endure the heat generated at the time of the joining. On the outer surface of the probe 21, convex and concave portions (not shown) are formed in order to facilitate the agitation of the materials around the abutted portion. The reference numeral 21a is a shoulder portion of the rotor 20.

The aforementioned joining devices 19 are disposed above the abutted portions 22, 23 of the main member 1, the yoke member 2 and the bush mounting member 3 with the probes 21 facing downwardly. The joining device 19 is attached to a lift (not shown) so as to descend and ascend. By operating the lift, the probe 21 is inserted into and pulled out of the abutted portion 22, 23. Since the probe 21 is inserted toward the rotating axis of the abutted members 1, 2, 3, an insertion pressure at the time of the insertion of the probe 21 and a pressing pressure to the outer surface of the abutted members by the shoulder portion of the rotor 20 are directed toward the rotating axis of the abutted members 1, 2, 3 from the insertion position of the probe 21.

Next, a friction agitation joining method using the aforementioned friction agitation joining apparatus will be explained.

At first, the supporting members 6, 7, 8 are disposed on the predetermined positions of the base member 5. In detail, the supporting members 6, 7, 8 are disposed on the predetermined positions of the base member 5 such that the center of the main member 1 is supported by the central supporting member 6, the abutted portion 22 of the main member 1 and the yoke member 2 is located between the supporting rollers 7b, 7b of the right supporting member 7 and the abutted portion 23 of the main member 1 and the bush mounting member 3 is located between the supporting rollers 8b, 8b of the supporting member 8. At the same time, the pressing members 16, 17, 18 are disposed at a predetermined portions of the lift 15 such that the pressing rollers 16b, 17b, 18b of the pressing members 16, 17, 18 are positioned above the supporting roller 6b of the supporting member 6, the supporting roller 7b of the supporting member 7 and the supporting roller 8b of the supporting member 8, respectively.

The yoke member 2 is chucked by the right chucking arm 11 of the right rotating device 9 and placed on the right supporting roller 7b of the right supporting member 7 so as to dispose the yoke member 2 at the predetermined position. In order to dispose the main member 1 at the predetermined position, the main member 1 is placed on the supporting rollers 7b, 6b, 8b of the supporting members 7, 6, 8. At this time, the convex portion 2a of the yoke member 2 has not been fitted in the hollow portion 1a of the main member 1, and the main member 1 and the yoke member 2 are disposed apart from each other.

After the completion of disposing the yoke member 2 and the main member 1, the bush mounting member 3 is chucked by the left chucking arm 13 of the left rotating device 10. In this state, as the left rotating device 10 is shifted toward the right rotating device 9, the convex portion 3b of the bush mounting member 3 is forcibly fitted into the hollow portion 1a of the main member 1 and the convex portion 2a of the yoke member 2 is forcibly fitted into the hollow portion 1a of the main member 1. As the left rotating device 10 further moves toward the right rotating device 9, the abutted portions 22, 23 of the abutted members 1, 2, 3 are axially pressed to be assuredly fitted each other.

Then, the pressing members 16, 17, 18 are descended by the lift 15 so as to downwardly press the main member 1 by the pressing rollers 16b, 17b, 18b. Accordingly, the main member 1, the yoke member 2 and the bush mounting member 3 are restricted to move in an up-and-down direction and a right-and-left direction by the supporting members 6, 7, 8, the right and left rotating devices 9, 10 and the pressing members 16, 17, 18.

In this state, the punching device (not shown) is operated. The punch 14 provided to the punching device is inserted into and then pulled out of the punching holes 13b, 13b formed in the upper and lower walls of the left chucking arm 13 of the left rotating device 10, which forms the rectangular punched opening 3c in the middle portion of the bush mounting member 3 chucked by the left chucking arm 13. At this time, the left chucking arm 13 functions as a die. The punched opening 3c may be formed after joining the abutted members.

Next, in order to join the abutted portions 22, 23 of the members 1, 2, 3 to be joined, the rotating probes 21 of the joining devices 19 descend by the lift (not shown) to insert into the abutted portions 22, 23 of the members 1, 2, 3. The insertion of the probes 21, 21 are performed until each shoulder portion 20a of the rotor 20 abuts and presses the surface of the abutted portion 22, 23. At this time, although a downward load is imparted to the abutted members 1, 2, 3 by the insertion pressure by the probe 21 as well as the pressing force by the shoulder portion 20a of the rotor 20, the bending of the abutted members 1, 2, 3 is prevented by the supporting rollers 6b, 7b, 8b of the supporting members 6, 7, 8. Therefore, the rotating axis of the abutted members 1, 2, 3 is not deviated.

In a state that the probe 21 is inserted into and the shoulder portion 20a of the rotor 20 is pressed onto the surface of the butted portions 22, 23, the abutted members 1, 2, 3 are rotated about the axis thereof by the driving motor 12 such that the probe 21 advances along the abutted portions 22, 23. At this time, as mentioned above, since the abutted portions 22, 23 of the abutted members 1, 2, 3 are assuredly fitted each other by the pressing force of the left rotating device 10, the rotation of the right chucking arm 11 of the right rotating device 9 by the driving motor 12 causes an integral rotation of the yoke member 2, the main member 1 and the bush mounting member 3.

By the friction heat generated by the rotation of the probe 21 and the shoulder portion 20a of the rotor 20, the abutted members 1, 2, 3 are softened and agitated at the contact portion of the probe 21 and an approximate portion thereof. In accordance with the rotation of the abutted members 1, 2, 3, the softened and agitated portion is plasticity fluidized so as to fill up the passing groove of the probe 21, and then the softened and agitated portion is cooled and solidified due to the rapid loss of the friction heat. This phenomenon is repeated in accordance with the rotation of the abutted members 1, 2, 3 to cause the joining of the abutted portions 23, 23 of the members 1, 2, 3, resulting in a suspension arm member 4.

Thereafter, the restriction of the suspension arm member 4 by the pressing members 16, 17, 18, the right and left rotating devices 9, 10 is released to take out the suspension arm member 4 by a clamp member (not shown).

As described above, since the yoke member 2, the main member 1 and the bush mounting member 3 are integrally rotated about the axis thereof due to the axial pressing of the members by the right and left rotating devices 9, 10, a difference in rotational rate of the members and a gap between the members 1, 2, 3 due to the pressing pressure onto the abutted portions 22, 23 or a slippage between the members 1, 2, 3 and the supporting rollers 6b, 7b, 8b can be assuredly prevented.

In this embodiment, since the right chucking arm 11 is rotated by the driving motor 12, the rotation of the driving motor 12 is assuredly transmitted to the abutted members 1, 2, 3. Thus, by changing the rotational rate of the driving motor 12, the abutted members 1, 2, 3 can be rotated about the axis thereof at any desired rotational rate.

In this embodiment, the right chucking arm 11 of the right rotating device 9 is rotated by the driving motor 12. However, the left chucking arm 13 of the left rotating device 10 may be rotated by the driving motor, or both chucking arms 11, 13 may be rotated by the driving motor. Alternatively, at least one of the supporting rollers 6b, 7b, 8b of the supporting members 6, 7, 8 may be rotated by the driving motor to rotate the abutted members 1, 2, 3.

The present invention claims a priority based on Japanese Patent Application No. Hei 11-112439 filed on April 20, 1999, the content of which is incorporated hereinto by reference in its entirety.

The terms and descriptions in this specification are used only for explanatory purposes and the present invention is not limited to these, but many modifications and substitutions may be made without departing from the scope of the appended claims.

## Claims

1. A friction agitation joining apparatus for joining a plurality of abutted members (2, 3, 4), said friction agitation joining apparatus, comprising:
supporting rollers (6b, 7b, 8b) for supporting the abutted members;
a driving motor (12) for rotating the abutted members about an axis thereof; and
a joining device (19) having a rotatable probe disposed adjacent to an abutted portion of the abutted members,
wherein said probe softens and agitates the abutted portion to join the abutted members in accordance with a rotation of the abutted members, **characterised by**
rotatable chucking portions (11, 13) for chucking opposite ends of the abutted members (2, 3) while axially pressing the abutted members.

2. The friction agitation joining apparatus as recited in claim 1, wherein at least one of said chucking portions is rotated by said driving motor to rotate the abutted members about an axis of the abutted members.

3. The friction agitation joining apparatus as recited in claim 1, wherein said supporting roller is rotated by said driving motor to rotate the abutted members about an axis of the abutted members.

4. The friction agitation joining apparatus as recited in claim 2 or 3, wherein said supporting roller is movable in a direction of the axis of the abutted members.

5. The friction agitation joining apparatus as recited in claim 2 or 3, wherein said supporting roller is capable of ascending and descending.

6. The friction agitation joining apparatus as recited in claim 2 or 3, wherein said supporting roller comprises a pair of rollers symmetrically disposed so as to rotatably support the abutted members at two points such that a predetermined angle is formed between said pair of rollers relative to the axis of the abutted members.

7. The friction agitation joining apparatus as recited in claim 2 or 3, further comprising a pressing roller for downwardly pressing the abutted members.

8. The friction agitation joining apparatus as recited in claim 2 or 3, further comprising a punching device having a punch for punching an opening into the abutted members at the same time, before or after the abutted members is joined.

9. The friction agitation joining apparatus as recited in claim 2 or 3, wherein at least one of said chucking portions is shiftable toward the other chucking portion to axially press the abutted members.

10. The friction agitation joining apparatus as recited in claim 2, wherein said driving motor is provided in said at least one of said chucking portion.

11. The friction agitation joining apparatus as recited in claim 2 or 3, wherein said joining device is capable of ascending and descending.

12. The friction agitation joining apparatus as recited in claim 1, wherein the abutted members include at least one of a yoke member and a bush mounting member.

13. The friction agitation joining apparatus as recited in claim 1, wherein the abutted members are made of aluminum or aluminum alloy.

## Patentansprüche

1. Reibschweißverbindungs-Vorrichtung zum Verbinden einer Mehrzahl von aneinander anliegenden Elementen (2, 3, 4), wobei die Reibschweißverbindungs-Vorrichtung aufweist:
Abstützrollen (6b, 7b, 8b) zum Abstützen der aneinander anliegenden Elemente,
einen Antriebsmotor (12) zum Rotieren der aneinander liegenden Elemente um ihre Achse, und
eine Verbindungsvorrichtung (19) mit einem drehbaren Senkstift, der benachbart zu dem Aneinanderliege-Bereich der aneinander liegenden Elemente angeordnet ist, wobei der Senkstift den Aneinanderliege-Bereich aufweicht und agitiert, um die aneinander liegenden Elemente entsprechend einer Rotation der aneinander liegenden Elemente zu verschweißen,
**gekennzeichnet durch** drehbare Einspannbereiche (11, 13) zum Einspannen von gegenüberliegenden Enden der aneinander liegenden Elemente (2, 3), während sie die aneinander liegenden Elemente axial drücken.

2. Reibschweißverbindungs-Vorrichtung nach Anspruch 1, wobei zumindest einer der Einspannbereiche durch den Antriebsmotor rotiert wird, um die aneinander liegenden Elemente um eine Achse der aneinander liegenden Elemente herum zu drehen.

3. Reibschweißverbindungs-Vorrichtung nach Anspruch 1, wobei die Abstützrolle durch den Antriebsmotor gedreht wird, um die aneinander liegenden Elemente um eine Achse der aneinander liegenden Elemente herum zu drehen.

4. Reibschweißverbindungs-Vorrichtung nach Anspruch 2 oder 3, wobei die Abstützrolle bewegbar in Richtung der Achse der aneinander liegenden Elemente ist.

5. Reibschweißverbindungs-Vorrichtung nach Anspruch 2 oder 3, wobei die Abstützrolle angehoben bzw. abgesenkt werden können.

6. Reibschweißverbindungs-Vorrichtung nach Anspruch 2 oder 3, wobei die Abstützrolle ein Paar Rollen aufweist, die symmetrisch angeordnet sind, um die aneinander liegenden Elemente an zwei Punkten drehbar abzustützen, sodass ein vorbestimmter Winkel zwischen dem Paar Rollen relativ zur Achse der aneinander liegenden Elemente ausgebildet wird.

7. Reibschweißverbindungs-Vorrichtung nach Anspruch 2 oder 3, die ferner eine Andruckrolle zum Herunterdrücken der aneinander liegenden Elemente aufweist.

8. Reibschweißverbindungs-Vorrichtung nach Anspruch 2 oder 3, die ferner eine Stanzvorrichtung mit einem Stempel zum Ausstanzen einer Öffnung in die aneinander liegenden Elemente aufweist, gleichzeitig, bevor oder nachdem die aneinander liegenden Elemente verbunden sind.

9. Reibschweißverbindungs-Vorrichtung nach Anspruch 2 oder 3, wobei zumindest einer der Einspannbereiche verschiebbar in Richtung des anderen Einspannbereichs ist, um die aneinander liegenden Elemente axial zu drücken.

10. Reibschweißverbindungs-Vorrichtung nach Anspruch 2, wobei der Antriebsmotor in dem zumindest einen der Aufspannungsbereiche vorgesehen ist.

11. Reibschweißverbindungs-Vorrichtung nach Anspruch 2 oder 3, wobei die Verbindungsvorrichtung (19) angehoben bzw. abgesenkt werden kann.

12. Reibschweißverbindungs-Vorrichtung nach Anspruch 1, wobei die aneinander liegenden Elemente zumindest ein Gabelelement oder ein Hülse-Befestigungselement aufweisen.

13. Reibschweißverbindungs-Vorrichtung nach Anspruch 1, wobei die aneinander liegenden Elemente aus Aluminium oder einer Aluminiumlegierung hergestellt sind.

## Revendications

1. Dispositif d'assemblage à agitation par frottement pour assembler une pluralité d'éléments aboutés (2, 3, 4), ledit dispositif d'assemblage à agitation par frottement, comprenant :
des rouleaux de support (6b, 7b, 8b) pour supporter les éléments aboutés ;
un moteur d'entraînement (12) pour faire tourner les éléments aboutés autour de son axe ; et
un dispositif d'assemblage (19) doté d'une sonde rotative disposée de manière adjacente à une partie d'aboutement des éléments aboutés,
dans lequel ladite sonde ramollit et agite la partie d'aboutement pour assembler les éléments aboutés selon une rotation des éléments aboutés,
**caractérisé en ce qu'**il comprend :
des parties de mandrin rotatives (11, 13) pour mandriner des extrémités opposées des éléments aboutés (2, 3) tout en pressant axialement les éléments aboutés.

2. Dispositif d'assemblage à agitation par frottement selon la revendication 1, dans lequel au moins l'une desdites parties de mandrin est entraînée en rotation par ledit moteur d'entraînement pour faire tourner les éléments aboutés autour d'un axe des éléments aboutés.

3. Appareil d'assemblage à agitation par frottement selon la revendication 1, dans lequel ledit rouleau de support est entraîné en rotation par ledit moteur d'entraînement pour faire tourner les éléments aboutés autour d'un axe des éléments aboutés.

4. Dispositif d'assemblage à agitation par frottement selon la revendication 2 ou 3, dans lequel ledit rouleau de support est mobile dans une direction de l'axe des éléments aboutés.

5. Dispositif d'assemblage à agitation par frottement selon la revendication 2 ou 3, dans lequel ledit rouleau de support est capable de monter et de descendre.

6. Dispositif d'assemblage à agitation par frottement selon la revendication 2 ou 3, dans lequel ledit rouleau de support comprend une paire de rouleaux disposés de manière symétrique afin de supporter en rotation les éléments aboutés au niveau de deux points de sorte qu'un angle prédéterminé est formé entre ladite paire de rouleaux par rapport à l'axe des éléments aboutés.

7. Dispositif d'assemblage à agitation par frottement selon la revendication 2 ou 3, comprenant en outre un rouleau de compression pour comprimer les éléments aboutés vers le bas.

8. Dispositif d'assemblage à agitation par frottement selon la revendication 2 ou 3, comprenant en outre un dispositif de poinçonnage doté d'un poinçon pour poinçonner une ouverture dans les éléments aboutés en même temps, avant ou après l'assemblage des éléments aboutés.

9. Dispositif d'assemblage à agitation par frottement selon la revendication 2 ou 3, dans lequel au moins l'une desdites parties de mandrin est déplaçable vers l'autre partie de mandrin pour presser de manière axiale les éléments aboutés.

10. Dispositif d'assemblage à agitation par frottement selon la revendication 2, dans lequel ledit moteur d'entraînement est prévu dans ladite au moins une de ladite partie de mandrin.

11. Dispositif d'assemblage à agitation par frottement selon la revendication 2 ou 3, dans lequel ledit dispositif d'assemblage est capable de monter et de descendre.

12. Dispositif d'assemblage à agitation par frottement selon la revendication 1, dans lequel les éléments aboutés comprennent au moins l'un parmi un élément d'étrier de montage et un élément de montage de douille.

13. Dispositif d'assemblage à agitation par frottement selon la revendication 1, dans lequel les éléments aboutés sont réalisés en aluminium ou en alliage d'aluminium.
